# EUROPÄISCHE PATENTSCHRIFT

(11) **EP 2 483 882 B1**
(45) Veröffentlichungstag und Bekanntmachung des Hinweises auf die Patenterteilung: **10.01.2018**
(21) Anmeldenummer: 10792814.5
(22) Anmeldetag: 30.09.2010
(51) Int. Cl.: G08G 1/017, G08G 1/054, G06K 9/32

(54) **VERFAHREN ZUR SOFORTIGEN AHNDUNG EINES VERKEHRSVERSTOSSES**
METHOD FOR IMMEDIATE PENALISATION OF A TRAFFIC OFFENSE
PROCÉDÉ POUR SANCTIONNER IMMÉDIATEMENT UNE INFRACTION ROUTIÈRE

(30) Priorität: 30.09.2009 DE 102009043742
(43) Veröffentlichungstag der Anmeldung: 08.08.2012
(73) Patentinhaber: JENOPTIK Robot GmbH, 40789 Monheim am Rhein (DE)
(72) Erfinder: KARNAS, Sinisa, 30175 Hannover (DE)
(74) Vertreter: Schaller, Renate
(86) Internationale Anmeldenummer: PCT/DE2010/050075
(87) Internationale Veröffentlichungsnummer: WO 2011/038729

(56) Entgegenhaltungen:
- EP-A1- 2 026 103
- DE-A1- 3 025 774
- JP-B2- 3 678 068
- US-A1- 2002 141 618
- US-A1- 2003 201 909
- US-A1- 2006 221 229
- US-A1- 2008 278 365

## Beschreibung

Die vorliegende Erfindung betrifft ein Verfahren zur Erfassung eines Verkehrsverstoßes, wie es gattungsgemäß aus der DE 10 2007 022 373 A1 bekannt ist.

Bei der automatischen Verkehrsüberwachung werden Zuwiderhandlungen (Verkehrsverstöße) gegen Verkehrsvorschriften beweiskräftig in Fotos festgehalten. Dies kann beispielsweise dadurch geschehen, dass das Verursacher-Fahrzeug fotografiert und die entsprechenden Daten, wie Geschwindigkeit, Rotphase, Datum und Uhrzeit, in Form alphanumerischer Zeichen in einer Scriptzeile auf dem Foto eingeblendet werden.

Um das Verursacher-Fahrzeug gerichtsverwertbar dem Verstoß zuordnen zu können, muss sich das Verursacher-Fahrzeug auf dem Foto in einem definierten Auswertebereich befinden und so scharf abgebildet sein, dass das Fahrzeug und das Kennzeichen eindeutig erkennbar sind. Daher muss sich der definierte Auswertebereich zum Zeitpunkt des Auslösens der Kamera innerhalb des Schärfentiefebereiches des Kameraobjektives (nachfolgend nur Kamera genannt) befinden. Zu diesem Zweck wird abhängig vom Messverfahren zur Erfassung des Verkehrsverstoßes eine Fotolinie (in der Praxis häufig als Fotopunkt bezeichnet) festgelegt, bei deren Erreichen die Kamera ausgelöst wird. Das Erreichen der Fotolinie durch ein Fahrzeug kann detektiert werden, z. B. wenn bei einer Radarmessung das Fahrzeug, aus dem Radarkegel fahrend, die sogenannte 3-dB-Linie (die Intensität der Radarstrahlung beträgt nur noch die Hälfte der Intensität in Richtung der Achse des Radarstrahls) passiert oder das Fahrzeug einen in oder auf der Fahrbahnoberfläche installierten Streifensensor, z. B. einen Piezostreifen überfährt. Das Erreichen einer Fotolinie kann auch z. B. aus der Kenntnis des Ortes des Fahrzeuges zu einem ersten Zeitpunkt und dessen gemessener Geschwindigkeit abgeschätzt werden.

Als Fotopunkt im Sinne dieser Anmeldung soll ein Punkt auf einer tatsächlich vorhandenen oder gedachten Fotolinie sein, die sich über die Fahrbahn erstreckt und deren relative Lage zur Kamera und der Kameraachse vollständig innerhalb des Schärfentiefebereiches des Kamera liegt und bekannt ist.

Der Begriff Fotopunkt bezieht sich demnach nur auf jeweils einen Punkt dieser Linie, auf den ein Fahrzeug trifft, in Abhängigkeit davon, wo es bezogen auf die Breite der Fahrbahn fahrend auf diese Linie auftrifft. Grundsätzlich ist damit die Relativlage des Fotopunktes zur Kamera im Voraus nicht bekannt, sondern nur die Relativlage der Fotolinie, die mit den technischen Gegebenheiten vorgeben wird.

Es ist dem Fachmann klar, dass hier unter einem Punkt kein geometrisch exakter Punkt gemeint ist, sondern nur eine Annäherung daran, behaftet mit den für das jeweilige Messverfahren zulässigen Fehler.

Die der Erfassung eines Verkehrsverstoßes nachfolgende Ahndung kann auf zwei grundsätzlich unterschiedliche Methoden erfolgen.

Entweder wird das Verursacher-Fahrzeug zeitnah nach dem Verkehrsverstoß durch Eingriff in den fließenden Verkehr angehalten und der Fahrer wird unmittelbar mit einem beweißkräftigen Foto konfrontiert oder das Beweisfoto wird dem Fahrzeughalter auf dem Postweg zugestellt.

Insbesondere die erstgenannte Methode hat eine hohe erzieherische Wirkung. Durch die direkte Konfrontation mit dem Verkehrsverstoß ist sowohl das Unrechtsempfinden als auch die Einsicht im Bezug auf den begangenen Verkehrsverstoß wesentlich höher, im Vergleich zu einer um Wochen späteren Ahndung, wodurch eine deutlich nachhaltigere Wirkung auf die Einhaltung der Verkehrsregeln erreicht wird. Auch kann der Fahrer das Fahren des Verursacher-Fahrzeuges nicht bestreiten, was bei der zweitgenannten Methode häufig zumindest versucht wird.

Sinnvoll ist, dass der Standort des Anhaltepersonals, an dem die Verursacher-Fahrzeuge angehalten werden, soweit von der Messstelle entfernt gewählt wird, dass dieser möglichst nicht vor oder von der Messstelle aus eingesehen werden kann. Anderenfalls würden die Fahrer vorgewarnt sein und sich folglich bewusst für eine kurze Zeit vorschriftsmäßig verhalten, womit eine erzieherische Wirkung ausbleibt.

Für die gerichtliche Verwertbarkeit muss einerseits sichergestellt und plausibel gemacht werden, dass der Verkehrsverstoß, insbesondere die gemessene Geschwindigkeit bei einem Geschwindigkeitsverstoß, korrekt ermittelt worden ist und andererseits muss der Verkehrsverstoß dem Verursacher-Fahrzeug zweifelsfrei zugeordnet werden können. Dies ist insbesondere bei Sensoren von hoher Bedeutung, die nicht fahrstreifenselektiv arbeiten, sondern deren Messbereich sich über mehrere Fahrstreifen erstreckt. Häufig ist das der Fall bei wellenstrahlbasierenden Messsystemen, die mit Lasersensoren oder Radarsensoren ausgerüstet sind. Zu den am weitesten verbreiteten Messsystemen zur Ermittlung von Geschwindigkeitsverstößen gehören Doppler-Radarsysteme.

Um ein z. B. mit Radarstrahlung angemessenes Fahrzeug eindeutig zu identifizieren, d. h. das angemessene Fahrzeug auf einer Fahrbahn mit mehreren Fahrstreifen in einer Gruppe von Fahrzeugen zu erkennen, wird in der EP 0 935 764 B1 vorgeschlagen, gleichzeitig mit der Geschwindigkeit auch die Entfernung zu erfassen und über die erfasste Entfernung das Fahrzeug einem Fahrstreifen zuzuordnen.

Wenn ein Geschwindigkeitsverstoß festgestellt wird, wird ein Warnsignal erzeugt, welches auch dazu verwendet werden kann, um eine Kamera zu aktivieren, wodurch eine Bildaufnahme vom angemessenen Fahrzeug, welches nachfolgend als Verletzer-Fahrzeug bezeichnet wird, erstellt wird. Zwar wird hier nicht offenbart, dass die Kamera erst ausgelöst wird, wenn sich das Verletzer-Fahrzeug an einer vorgegebenen Fotolinie befindet, jedoch kann man davon ausgehen, dass das so ist, da ansonsten auch die erfasste Entfernung nicht zweifelsfrei einem Fahrstreifen zugeordnet werden kann.

Vergleichbare Verfahren haben sich aber auch bei anderen Messtechniken wie z. B. Lasersensoren oder fest in oder auf der Fahrbahnoberfläche installierten Sensoren etabliert.

Aufgrund des Abstandes zwischen der Messstelle und dem Standort des Anhaltepersonals, der bedingt durch die örtlichen Gegebenheiten einige 100 m sein kann, ergibt sich bei Fahrbahnen mit mehreren Fahrstreifen in einer Fahrtrichtung die Notwendigkeit, dass nicht nur der Verkehrsverstoß dem Verursacher-Fahrzeug zweifelsfrei zugeordnet werden muss, sondern auch, dass das Verursacher-Fahrzeug nach einem Wechsel des Fahrstreifens noch zweifelsfrei identifizierbar sein muss.

Für eine zweifelsfreie Identifizierung wird üblicherweise das Fahrzeugkennzeichen genutzt.

In der EP 0 935 764 B1 wird kein Hinweis gegeben, ob und wenn ja welche Maßnahmen getroffen werden, falls das Fahrzeugkennzeichen des angemessenen Verletzer-Fahrzeuges in der Abbildung nicht erkennbar ist.

Wird, wie in der EP 0 935 764 B1 gezeigt, die Kamera unter einem spitzen Winkel zum Fahrbahnrand seitlich der Fahrbahn positioniert, passieren Fahrzeuge, die auf unterschiedlichen Fahrstreifen fahren, den Sehwinkelbereich der Kamera innerhalb unterschiedlicher Entfernungsbereiche und treffen demnach zwingend in unterschiedlichen Entfernungen zur Kamera auf die Fotolinie , das heißt die Fahrzeuge werden an individuellen Fotopunkten in unterschiedlichen Entfernung aufgenommen und entsprechend unterschiedlich groß abgebildet.

Fahrzeugkennzeichen von Fahrzeugen, die auf weiter entfernt liegenden Fahrstreifen fahren, sind dann im Foto bzw. auf einem Monitor, auf dem die Bildaufnahme wiedergegeben wird, nicht mehr mit bloßem Auge zu identifizieren.

Bei aus verschiedenen am Markt bekannten Geräten, wie z. B. dem in der Schweiz zugelassenen Radargerät MultaRadar CD (Zulassungszertifikat CH-P-09178-00) der Robot Visual Systems GmbH, können die Bildaufnahmen auf der Anzeige (Monitor) am Handbedienteil angezeigt werden. Um das Fahrzeugkennzeichen ablesen zu können, muss die Ansicht vom Messpersonal vergrößert und an die Position des Kennzeichens verschoben werden. Dies ist mühsam, zeitintensiv und bei Kolonnenverkehr nicht mehr durchführbar. Weiterhin ist das Messpersonal während der Interaktion abgelenkt und es ist kein aufmerksamer Messbetrieb, wie in vielen Ländern vom Gesetzgeber vorgeschrieben, mehr möglich.

Es ist die Aufgabe der Erfindung, ein Verfahren zur Ahndung von Verkehrsverstößen zu finden, mit dem eine beweissichere, mehrere Fahrstreifen erfassende Bildaufnahme erstellt werden kann und Verletzer-Fahrzeuge unabhängig von deren jeweiligen Position in der Bildaufnahme mit einem nahezu gleich großen Kennzeichen auf einem Monitor angezeigt, bzw. in einem Foto dargestellt werden können.

Nicht gelöst werden kann diese Aufgabe, indem, wie aus dem allgemeinen Stand der Technik im Bereich der Fotografie bekannt, das Objekt, hier ein Fahrzeugkennzeichen, über ein symmetrisch mittiges Vergrößern (Zoomen) identifizierbar gemacht wird, da die Positionen der Fahrzeugkennzeichen von auf unterschiedlichen Fahrstreifen fahrenden Fahrzeugen, wenn sie die Fotolinie passieren, nicht auf einer gemeinsamen Achse liegen.

Ein fahrstreifenselektives Nachführen der Kamera in Kombination mit einem Motorzoom würde dieses Problem zwar lösen, dann würde allerdings der für die verkehrsmetrologische Zulassung unbedingt notwendige fixe Fotowinkel nicht mehr gewährleistet sein und das Verstoßfoto gerichtlich anfechtbar werden.

Die Aufgabe der Erfindung wird für ein Verfahren zur Ahndung von Verkehrsverstößen, bei dem auf einer Fahrbahn mit mehreren Fahrstreifen ein Verkehrsverstoß mit einer Messeinrichtung messtechnisch erfasst wird und eine Bildaufnahme des Verletzer-Fahrzeuges mit einer Kamera erstellt wird, sobald die Fahrzeugfront, bei ankommendem Verkehr, bzw. das Fahrzeugheck, bei abfließendem Verkehr, eine vorgegebene Fotolinie passiert, wobei aus der Bildaufnahme ein Bildausschnitt, in dem das Fahrzeugkennzeichen des Verletzer-Fahrzeuges abgebildet ist, in eine vorgegebene Größe vergrößert und dargestellt wird, dadurch gelöst, dass ein Fotopunkt auf der Fotolinie, in Abhängigkeit vom Ort, an dem das Verletzer-Fahrzeug die Fotolinie passiert, erfasst wird und der Bildausschnitt bezogen auf diesen Fotopunkt in der Lage und der Größe ausgewählt wird.

Die erfindungsgemäße vergrößerte Darstellung des Fahrzeugkennzeichens auf einem Monitor erlaubt ein optimales Ablesen des Fahrzeugkennzeichens und somit das unmittelbare Anhalten des Verletzer-Fahrzeuges durch einen unverzüglichen Eingriff in den fließenden Verkehr.

In der Praxis ist der Monitor in der Regel mit der Kamera verbunden und befindet sich demnach an der Messstelle. Das nach einem Verkehrsverstoß auf dem Monitor dargestellte Fahrzeugkennzeichen kann vom Messpersonal abgelesen und dem Anhaltepersonal mitgeteilt werden, z. B. mittels eines Sprechfunkgerätes. Aber auch eine direkte Fernanzeige des Fahrzeugkennzeichens auf einem Monitor am Standort des Anhaltepersonals ist denkbar.

Das Verfahren ist in Verbindung mit den unterschiedlichsten Methoden zur Erfassung von Verkehrsverstößen durchführbar. Entscheidend ist, dass eine Bildaufnahme vom Verletzerfahrzeug an einer definierten Fotolinie erstellt wird und der Ort (Fotopunkt) ermittelt wird, an dem das Verletzter-Fahrzeug bezogen auf die Breite der Fahrbahn die Fotolinie passiert.

Vorteilhaft kann die Fotolinie aus einer Anzahl von in oder auf der Fahrbahnoberfläche installierten, jeweils einem Fahrstreifen zugeordneten Streifensensoren gebildet werden.

Die Streifensensoren können zueinander versetzt oder vorteilhaft in einer Flucht, senkrecht zum Fahrbahnrand installiert sein. Mit der Anordnung der Kamera zur Fahrbahn und Ausrichtung der Kameraachse wird die Relativlage der Streifensensoren und damit der Fotolinie zur Kamera festgelegt.

Überfährt das Verletzer-Fahrzeug nur einen Streifensensor, wird es auch nur von diesem detektiert. Es wird ein ausgewählter Punkt auf dem das Verletzer-Fahrzeug detektierenden Sensor, z. B. der Mittelpunkt des Streifensensors, als Fotopunkt definiert und von diesem ausgehend ein Bildausschnitt ausgewählt, wodurch pro Detektion durch einen Fahrsteifen jeweils ein gleicher Bildausschnitt vergrößert wird.

Wird das Verletzer-Fahrzeug durch zwei Streifensensoren detektiert, so kann vorteilhaft der Mittelpunkt zwischen den zwei benachbarten Streifensensoren als Fotopunkt definiert werden, wodurch zusätzlich zu den Bildausschnitten, von denen pro Fahrspur jeweils einer ausgewählt werden kann, weitere Bildausschnitte ausgewählt werden können.

Vorteilhaft ist die Aufstellung der Kamera neben der Fahrbahn, wobei die Kameraachse so ausgerichtet wird, dass sie die Fahrstreifen der Fahrbahn unter einem spitzen Winkel schneidet.

Auch kann das Verfahren vorteilhaft durchgeführt werden, wenn als Fotolinie ein Randstrahl eines Radarkegels genutzt wird, dessen Relativlage zur Kamera und der Kameraachse durch den Standort eines Radarsensors, der als Messeinrichtung zur Feststellung des Verkehrsverstoßes eingesetzt wird, und eine feste Winkellage der Radarstrahlungsachse und damit des Randstrahles zur Kameraachse bestimmt ist. Mit der messtechnischen Erfassung des Verkehrsverstoßes wird auch die Entfernung des Verletzer-Fahrzeuges von dem Radarsensor beim Passieren der Fotolinie ermittelt, um über die ermittelte Entfernung den Fotopunkt auf der Fotolinie zu erfassen.

Die Fotolinie kann auch eine zum Standort der Kamera und der Ausrichtung der Kameraachse in fester Beziehung stehende, gedachte Linie sein.

Das Passieren dieser Fotolinie wird nicht detektiert, sondern rechnerisch ermittelt, indem das Verletzer-Fahrzeug an einem vorbekannten Ort detektiert, die Geschwindigkeit gemessen und aus dem Ort und der Geschwindigkeit der Zeitpunkt des Passierens der Fotolinie errechnet wird. Die hierzu notwendige Erfassung der Entfernung erfolgt mit der messtechnischen Erfassung des Verkehrsverstoßes mit einem die Entfernung messenden Messsensor, der in einer bekannten Relativlage zur Kamera angeordnet ist. Über die ermittelte Entfernung beim Passieren der Fotolinie wird der Fotopunkt auf der Fotolinie bestimmt.

Auch kann die Fotolinie vorteilhaft der Randstrahl des Scanwinkelbereiches eines Laserscanners sein, dessen Relativlage zur Kamera und der Kameraachse durch den Standort des Laserscanners, den Scanwinkel und eine feste Winkellage der Laserscannerachse und damit des Randstrahles zur Kameraachse bestimmt ist.

Mit der messtechnischen Erfassung des Verkehrsverstoßes wird auch hier die Entfernung des Verletzerfahrzeuges von dem die Entfernung messenden Laserscanner, der in einer bekannten Relativlage zur Kamera angeordnet ist, beim Passieren der Fotolinie ermittelt, um über die ermittelte Entfernung den Fotopunkt auf der Fotolinie zu bestimmen.

Vorteilhaft werden der Radarsensor bzw. der Laserscanner so zur Kamera angeordnet, dass der Randstrahl der Radarkeule bzw. der Randstrahl des Scanwinkelbereiches und die Kameraachse zusammenfallen. Damit liegt die Fotolinie und somit auch der Fotopunkt auf der Kameraachse.

Indem der Fotopunkt als Punkt auf der Fotolinie im Abstand der ermittelten Entfernung festgelegt wird, kann zu jeder ermittelten Entfernung individuell ein Bildausschnitt ausgewählt werden.

Um die erforderliche Rechenkapazität gering zu halten, kann als Fotopunkt auch ein Punkt auf der Fotolinie im Abstand des Mittelwertes eines vorgegebenen Entfernungsintervalls festgelegt werden. Damit wird für alle ermittelten Entfernungen innerhalb eines vorgegebenes Entfernungsintervalls ein gleicher Bildausschnitt ausgewählt.

Zur Durchführung des Verfahrens kann die Kamera auch oberhalb der Fahrbahn montiert werden, wobei die Kameraachse zum Fahrbahnrand parallel ausgerichtet wird.

Die Fotolinie kann dann eine, in einer von der Kamera vorgegebenen Entfernung senkrecht zur Kameraachse verlaufende, gedachte Linie sein. Ein auch zur Erfassung des Verkehrsverstoßes verwendeter Radarsensor richtet hierzu einen Radarkegel so auf die Fahrbahn, dass die Radarachse mit der Kameraachse zusammenfällt und der Radarsensor den Winkel ermittelt, unter dem das Verletzer-Fahrzeug zu dem Zeitpunkt, an dem es in der vorgegebenen Entfernung detektiert wird, vom Radarsensor erfasst wird, um aus dem Winkel und der Entfernung den Fotopunkt zu bestimmen.

Anstelle eines Radarsensors kann vorteilhaft auch ein Laserscanner, dessen Laserscannerachse in Richtung der Kameraachse ausgerichtet ist, den Winkel des Verletzer-Fahrzeuges zur Kameraachse ermitteln, unter dem das Verletzer-Fahrzeug zu dem Zeitpunkt, an dem es in der vorgegebenen Entfernung detektiert wird, vom Laserscanner erfasst wird, um aus dem Winkel und der Entfernung den Fotopunkt zu bestimmen.

Der aus der Bildaufnahme auszuwählende und zu vergrößernde Bildausschnitt wird in seiner Größe so ausgewählt, dass das Fahrzeugkennzeichen des Verletzer-Fahrzeuges sicher erfasst ist.

Sofern z. B. der Fotopunkt aus einer einzelnen erfassten Entfernung oder einem Winkel bestimmt wird, und somit jedem Entfernungs- oder Winkelwert ein Fotopunkt zugeordnet wird, auf den bezogen ein Bildausschnitt ausgewählt wird, muss der Bildausschnitt nicht viel größer als die Abbildung des Fahrzeugkennzeichens sein.

Damit ist eine maximale Vergrößerung des Fahrzeugkennzeichens möglich.

Wird hingegen der Fotopunkt aus dem Mittelwert eines Entfernungsintervalles ermittelt, oder ist er als ein ausgewählter Punkt über der Länge eines Streifensensors definiert, muss der Bildausschnitt in seiner Größe so gewählt werden, dass das Fahrzeugkennzeichen eines jeden Verletzer-Fahrzeuges umfasst ist, welches in diesem Entfernungsintervall die Fotolinie bzw. diesen einen Streifensensor überfährt.

Damit wird eine mögliche Vergrößerung eingeschränkt, jedoch wird hierfür auch weniger Rechenkapazität benötigt, da wiederholt auf die gleichen Bildausschnitte zugegriffen wird und diese nicht immer wieder neu ausgewählt werden müssen.

Bei der Ausrichtung der Kameraachse in einem spitzen Winkel zur Fahrbahn sollte die Form des Bildausschnittes vorteilhaft ein Parallelogramm sein, dessen Innenwinkel vom horizontalen Kamerawinkel abhängen. Unter dem horizontalen Kamerawinkel wird der Winkel verstanden, den die Kameraachse mit dem Fahrbahnrand einschließt.

Eine Seite des Parallelogramms wird vorteilhaft auf die in die Bildaufnahme projizierte Fotolinie gelegt.

Wird die Kameraachse in Richtung der Fahrbahn ausgerichtet, d. h. ist der horizontale Kamerawinkel gleich Null, sollte die Form des Bildausschnittes vorteilhaft ein Rechteck sein, was aber auch eine Sonderform eines Parallelogramms darstellt.

Vorteilhaft wird von dem Fotopunkt ausgehend der Bildausschnitt ausgewählt, wobei der Fotopunkt auf der unteren Seite des Parallelogramms liegt.

Für die Bestimmung des Fotopunktes aus einer einzelnen Entfernung, ermittelt z. B. beim Verlassen eines Radarkegels, wird der Bildausschnitt ausgehend von der linken unteren Ecke, die durch den Fotopunkt festgelegt wird, ausgewählt.

Der Bildausschnitt wird vorteilhaft so stark vergrößert, dass die vergrößerte Darstellung in ihrer Größe auf die Bildschirmgröße eines Monitors angepasst ist und die Darstellung auf dem Monitor erfolgt.

Die Ermittlung des Bildausschnittes, ausgehend von einem Fotopunkt, der messtechnisch im Moment der Erstellung der Bildaufnahme ermittelt wird, erlaubt auch den sicheren Rückschluss, dass es sich bei dem im Bildausschnitt abgebildeten Fahrzeug tatsächlich um das angemessene Fahrzeug handelt.

Damit kann der Bildausschnitt nicht nur zur sicher lesbaren Darstellung des Kennzeichens des angemessenen Fahrzeuges dienen, sondern auch als Bestätigung, dass genau dieses abgebildete Fahrzeug das Verletzer-Fahrzeug ist. Hierzu kann beispielsweise der vergrößerte Bildausschnitt unabhängig von der Bildaufnahme abgespeichert und als Foto ausgedruckt werden. Wie in die Bildaufnahme üblich, können auch in den Bildausschnitt Daten eingeblendet werden.

Nachfolgend wird die Erfindung in Ausführungsbeispielen anhand der Zeichnung näher erläutert. Hierzu zeigen:
Fig. la eine schematische Darstellung der Draufsicht auf eine Verkehrsszene, bei der ein Verletzer-Fahrzeug einen auf der Fahrbahnoberfläche installierten Streifensensor passiert
Fig. 1b eine schematische Darstellung einer Bildaufnahme von der in Fig. 1a dargestellten Verkehrsszene, bei dem anstelle des Verletzer-Fahrzeuges ein hierfür ausgewählter Bildausschnitt dargestellt ist
Fig. 2a eine schematische Darstellung der Draufsicht auf eine Verkehrsszene, bei der ein Verletzer-Fahrzeug einen Radarkegel verlässt
Fig. 2b eine schematische Darstellung einer Bildaufnahme von der in Fig. 2a dargestellten Verkehrsszene, bei der anstelle des Verletzer-Fahrzeuges ein hierfür ausgewählter Bildausschnitt dargestellt ist
Fig. 3a die reale Abbildung einer Bildaufnahme von einer Verkehrsszene auf einem Monitor
Fig. 3b eine schematische Darstellung der Abbildung gemäß Fig. 3a
Fig. 4a die Abbildung gemäß Fig. 3a, in die beispielhaft eine Fotolinie und zwei Bildausschnitte projiziert wurden
Fig. 4b eine schematische Darstellung der Abbildung gemäß Fig. 4a
Fig. 5a eine reale Abbildung eines vergrößerten Bildausschnittes
Fig. 5b eine schematische Darstellung der Abbildung gemäß Fig. 5a

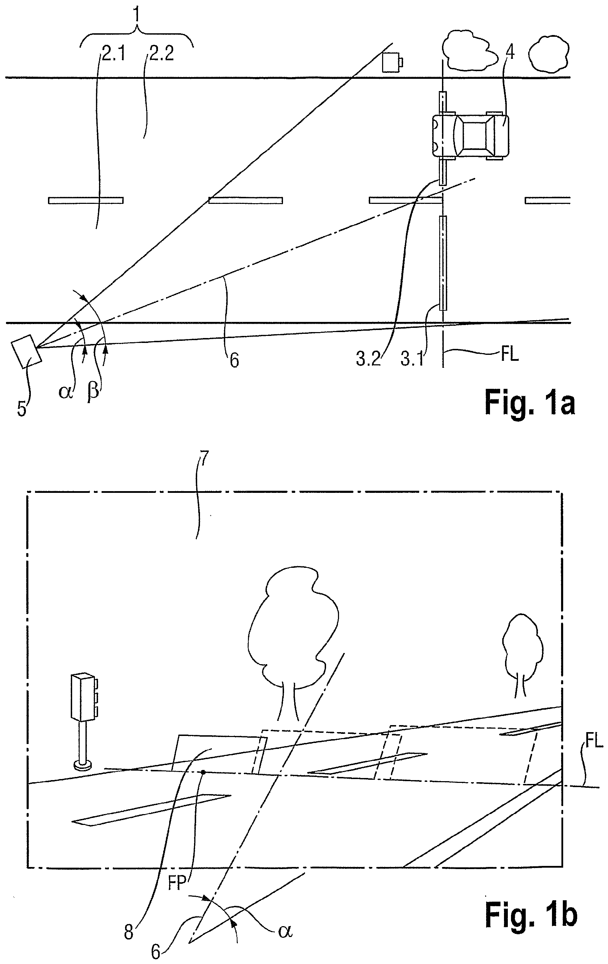

In den Fig. 1a und 1b ist eine Fahrbahn 1 mit einem ersten und einem zweiten Fahrstreifen 2.1, 2.2, auf deren Fahrbahnoberfläche, fluchtend angeordnet, ein erster 3.1 und ein zweiter Streifensensor 3.2 installiert ist, gezeigt. Die Streifensensoren 3.1, 3.2 können Piezostreifen oder Abschnitte von Induktionsschleifen sein und definieren mit ihrer Lage die Lage der Fotolinie FL.

In der hier dargestellten Verkehrsszene überrollt gerade ein Verletzer-Fahrzeug 4 im ankommenden Verkehr den zweiten Steifensensor 3.2 mit seinen Vorderrädern.

Der zweite Streifensensor 3.2 detektiert das Verletzer-Fahrzeug 4 und gibt ein Signal an eine Kamera 5 ab, um eine Bildaufnahme 7 von der momentanen Verkehrsszene zu erstellen.

Die Kamera 5 ist neben der Fahrbahn 1 installiert, wobei die Kameraachse 6 einen horizontalen Kamerawinkel α mit dem Fahrbahnrand einschließt, der so gewählt ist, dass das Objektfeld der Kamera 5, dessen Größe durch den Sehwinkel β der Kamera 5 bestimmt ist, alle Fahrspuren der Fahrbahn 1 erfasst.

Die Erfindung ist nicht auf eine Anwendung für nur zwei Fahrspuren beschränkt, obwohl in den Ausführungsbeispielen der Übersichtlichkeit halber die Fahrbahn 1 mit nur zwei Fahrspuren dargestellt wird.

Aus der Kenntnis heraus, dass das Verletzer-Fahrzeug 4 durch den zweiten Streifensensor 3.2 detektiert wurde und dessen bekannter Lage zur Kamera 5, wird ein auf dem zweiten Streifensensor 3.2 ausgewählter Punkt, zum Beispiel ein Punkt auf der Mitte des zweiten Streifensensors 3.2, bezogen auf seine Länge, als Fotopunkt FP definiert. Von diesem Fotopunkt FP aus wird ein Bildausschnitt 8 ausgewählt, wobei in diesem Ausführungsbeispiel der Fotopunkt FP mittig auf der unteren Seite des als Parallelogramm ausgebildeten Bildausschnittes 8 liegt.

Aufgrund des horizontalen Winkels α werden die Fahrzeugfront, bei ankommendem Verkehr, und das Fahrzeugheck, bei abfließendem Verkehr, in der Bildaufnahme 7 nicht in Draufsicht, sondern in einer perspektivischen Ansicht dargestellt. Daraus ergibt sich, dass die Bildausschnitte 8 vorteilhaft in der Form von Parallelogrammen ausgewählt werden.

Je weiter das Verletzer-Fahrzeug 4 von der Kamera 5 entfernt ist, desto kleiner ist es in der Bildaufnahme 7 abgebildet und umso kleiner kann die Größe des Bildausschnittes 8 gewählt werden, wodurch eine höhere Vergrößerung möglich wird. Unterschiedliche Größen für drei Bildausschnitte 8 sind in Fig. 1b dargestellt. Da in diesem Ausführungsbeispiel lediglich drei Punkte auf der Fotolinie FL als Fotopunkte FP definiert werden sollen, nämlich die Mittelpunkte der Streifensensoren 3.1, 3.2 und ein Punkt mittig zwischen diesen, sind die Bildausschnitte 8 so breit ausgewählt, dass sie sich überlappen, um sicher auch von jedem passierenden Verletzer-Fahrzeug 4 das Fahrzeugkennzeichen vollständig zu erfassen.

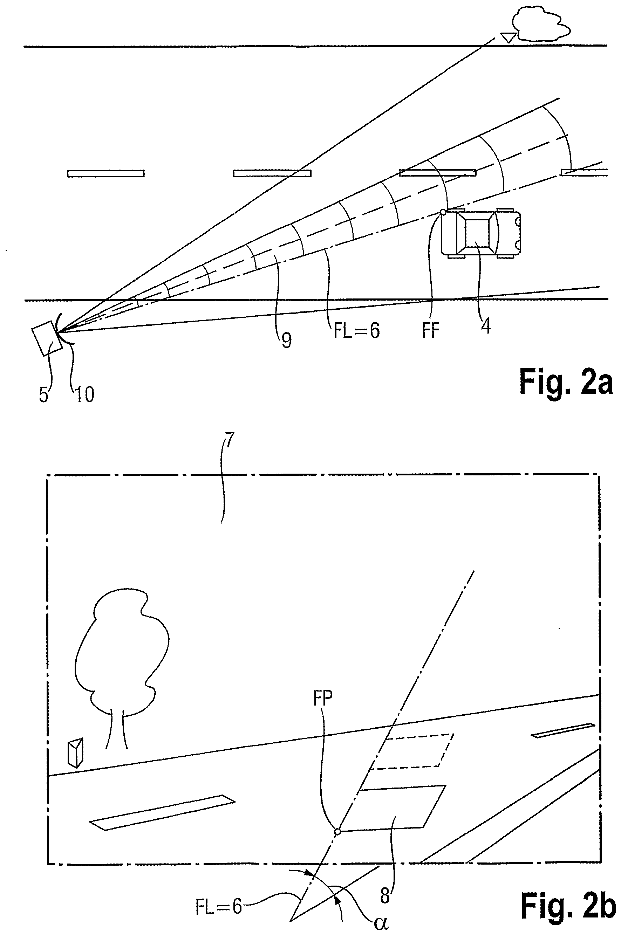

In den Fig. 2a und 2b wird die Lage der Fotolinie FL durch einen Randstrahl eines Radarkegels 9 bestimmt. Ein Radarsensor 10, von dem der Radarkegel 9 ausgeht, ist so zur Kamera 5 ausgerichtet, dass deren Kameraachse 6 mit dem als Fotolinie FL wirkenden Randstrahl zusammenfällt. Fährt nun ein Fahrzeug durch den Radarkegel 9 und wird als ein Verletzer-Fahrzeug 4 erkannt, wird eine Bildaufnahme 7 durch die Kamera 5 erstellt, wenn das Verletzer-Fahrzeug 4 letztmalig auf der Fotolinie FL detektiert wird. Das ist in dieser Messsituation dann, wenn das Verletzer-Fahrzeug 4 den Radarkegel 9 mit der hinteren, linken Fahrzeugecke verlässt. Durch die gleichzeitige Erfassung der Entfernung dieser Fahrzeugecke kann aus der Entfernung auf der Fotolinie FL der Fotopunkt FP bestimmt werden.

Von diesem Fotopunkt FP aus wird ein Bildausschnitt 8 ausgewählt, der ebenfalls die Form eines Parallelogramms hat, wobei der Fotopunkt FP die linke untere Ecke des Bildausschnittes 8 in der Bildaufnahme 7 bildet. Da mit jedem gemessenen Entfernungswert ein Fotopunkt FP auf der Fotolinie FL bestimmt wird und von diesem ausgehend ein individueller Bildausschnitt 8 ausgewählt wird, kann dieser nahezu auf die Größe der Fahrzeugkennzeichens in der Bildaufnahme 7 begrenzt und entsprechend stark vergrößert werden.

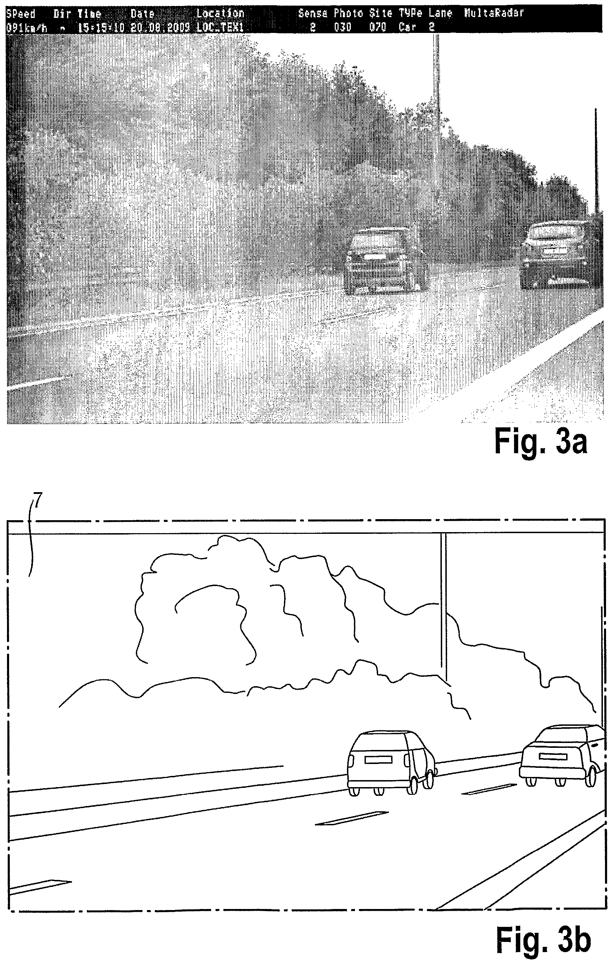

Die Fig. 3a und 3b zeigen eine reale Bildaufnahme 7 und eine entsprechende, stilisierte Darstellung.

In dieser Bildaufnahme 7 sind zwei Fahrzeuge, jeweils auf einem Fahrstreifen 2.1, 2.2, im abfließenden Verkehr fahrend, abgebildet.

Diese Bildaufnahme 7 kann z. B. mit dem fotografierenden Radar-Geschwindigkeits-Messgerät MultaRadar CD (MultaRadar - eingetragene Marke der Robot Visual Systems GmbH) erstellt werden, wie in dem, in der DE 10 2007 022 373 A1 zitierten Stand der Technik, beschrieben ist. Ein derartiges Messgerät wird neben dem zu überwachenden Straßenabschnitt in einer festen Kabine, in einem Fahrzeug oder auf einem Stativ aufgestellt, und ermittelt nach dem bekannten Dopplerprinzip die Geschwindigkeit der die Messstelle passierenden Fahrzeuge, und zwar sowohl die der im abfließenden Verkehr fahrenden Fahrzeuge, wie hier in der Bildaufnahme 7 abgebildet, als auch die der im ankommenden Verkehr fahrenden Fahrzeuge. Wird ein die jeweilige Höchstgeschwindigkeit überschreitendes Fahrzeug angemessen, wird es als Verletzer-Fahrzeug 4 fotografiert und es werden gleichzeitig die für die spätere Ahndung der Geschwindigkeitsüberschreitung erforderlichen Daten inklusive des gemessenen Fahrstreifens 2.1, 2.2 in der vorzugsweise oberen Scriptzeile der Fotografie eingeblendet.

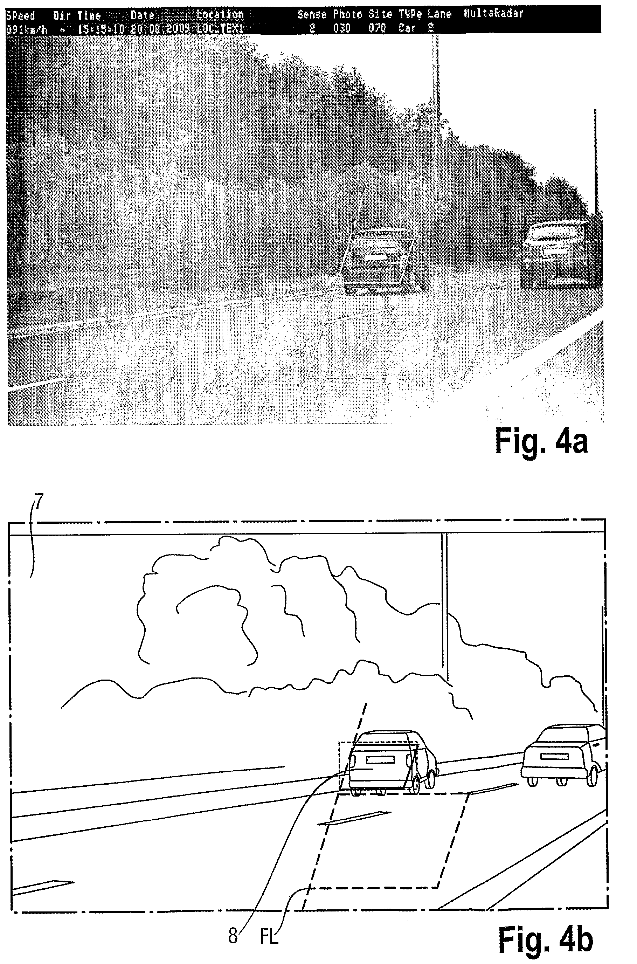

Die Fig. 4a und 4b entsprechen den Darstellungen in den Fig. 3a und 3b, wobei zusätzlich die Fotolinie FL und ein für das gerade die Fotolinie FL mit der hinteren linken Fahrzeugecke passierende Verletzer-Fahrzeug 4 ausgewählter Bildabschnitt 8 in die Bildaufnahme 7 projiziert wurde, deren bildliche Darstellung nur zum Verständnis der Erfindung dient und nicht real erfolgt. Um den durch eine Volllinie dargestellten Bildausschnitt 8 in Form eines Parallelogramms ist, durch eine Punktlinie dargestellt, ein das Parallelogramm umschreibendes Rechteck gezeigt. Mit der Vergrößerung des Parallelogramms auf die Größe des Bildschirmes eines Monitors ist letztendlich der durch das Rechteck umfasste Bildbereich auf dem Monitor sichtbar.

Ein zusätzlicher, größerer Bildausschnitt 8 ist, durch Strichlinien dargestellt, über dem ersten Fahrstreifen 2.1 gezeigt und soll zeigen, dass die Bildausschnitte 8 in die Tiefe der Bildaufnahme 7 gehend kleiner werden.

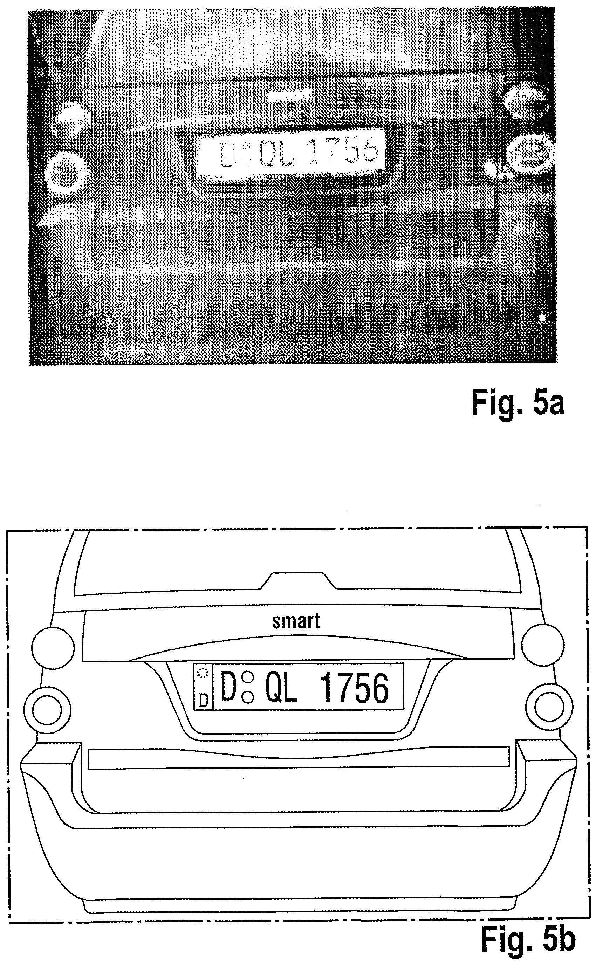

Abschließend zeigen die Fig. 5a und 5b einen realen Bildausschnitt 8 und eine entsprechende, stilisierte Darstellung auf die Größe des Monitors vergrößert.

Das Fahrzeugkennzeichen ist eindeutig erkennbar.

### Bezugszeichenliste

1 Fahrbahn
2.1 erster Fahrstreifen
2.2 zweiter Fahrstreifen
3.1 erster Streifensensor
3.2 zweiter Streifensensor
4 Verletzer-Fahrzeug
5 Kamera
6 Kameraachse
7 Bildaufnahme
8 Bildausschnitt
9 Radarkegel
10 Radarsensor
α horizontaler Kamerawinkel
β Sehwinkel der Kamera
FL Fotolinie
FP Fotopunkt

## Patentansprüche

1. Verfahren zur Ahndung von Verkehrsverstößen, bei dem auf einer Fahrbahn (1) mit mehreren Fahrstreifen ein Verkehrsverstoß mit einer Messeinrichtung messtechnisch erfasst wird und eine Bildaufnahme (7) des Verletzer-Fahrzeuges (4) mit einer Kamera (5) erstellt wird, sobald die Fahrzeugfront, bei ankommendem Verkehr, bzw. das Fahrzeugheck, bei abfließendem Verkehr, eine vorgegebene Fotolinie (FL) passiert,
wobei aus der Bildaufnahme (7) ein Bildausschnitt (8), in dem das Fahrzeugkennzeichen des Verletzer-Fahrzeuges (4) abgebildet ist, in eine vorgegebene Größe vergrößert und dargestellt wird, **dadurch gekennzeichnet,**
**dass** ein Fotopunkt (FP) auf der Fotolinie (FL) in Abhängigkeit vom Ort, an dem das Verletzer-Fahrzeug (4) die Fotolinie (FL) passiert, erfasst wird, und der Bildausschnitt (8) bezogen auf diesen Fotopunkt (FP) in Lage und Größe ausgewählt wird.

2. Verfahren nach Anspruch 1, **dadurch gekennzeichnet,**
**dass** die Fotolinie (FL) aus einer Anzahl von in oder auf der Fahrbahnoberfläche installierten, jeweils einem Fahrstreifen (2.1, 2.2) zugeordneten Streifensensoren (3.1, 3.2) gebildet wird, deren Relativlage zur Kamera (5) und der Kameraachse (6) durch die gegebene Aufstellung der Kamera (5) bestimmt ist, und der Ort, an dem das Verletzer-Fahrzeug (4) die Fotolinie (FL) passiert, durch Fahrstreifen (2.1, 2.2) definiert ist, dem der Streifensensor (3.1, 3.2) zugeordnet ist, der das Verletzer-Fahrzeug (4) detektiert, und ein ausgewählter Punkt auf dem einen das Verletzer-Fahrzeug (4) detektierenden Streifensensor (3.1, 3.2) als Fotopunkt (FP) definiert wird, wodurch pro Fahrsteifen (2.1, 2.2) jeweils ein gleicher Bildausschnitt (8) vergrößert wird.

3. Verfahren nach Anspruch 1, **dadurch gekennzeichnet,**
**dass** die Fotolinie (FL) aus in oder auf der Fahrbahnoberfläche installierten, jeweils einem Fahrstreifen (2.1, 2.2) zugeordneten Streifensensoren (3.1, 3.2) gebildet wird, deren Relativlage zur Kamera (5) und der Kameraachse (6) durch die gegebene Aufstellung der Kamera (5) bestimmt ist, und der Mittelpunkt zwischen zwei benachbarten Streifensensoren (3.1, 3.2) als Fotopunkt (FP) definiert wird, wenn das Verletzer-Fahrzeug (4) durch beide Streifensensoren (3.1, 3.2) detektiert wird.

4. Verfahren nach Anspruch 1, **dadurch gekennzeichnet,**
**dass** die Kamera (5) neben der Fahrbahn (1) so aufgestellt und die Kameraachse (6) so ausgerichtet wird, dass sie die Fahrstreifen (2.1, 2.2) der Fahrbahn (1) unter einem spitzen Winkel schneidet.

5. Verfahren nach Anspruch 4, **dadurch gekennzeichnet,**
**dass** die Fotolinie (FL) ein Randstrahl eines Radarkegels (9) ist, dessen Relativlage zur Kamera (5) und der Kameraachse (6) durch den Standort des Radarsensors (10) und eine feste Winkellage der Radarstrahlungsachse und damit des Randstrahles zur Kameraachse (6) bestimmt ist, und mit der messtechnischen Erfassung des Verkehrsverstoßes auch die Entfernung des Verletzer-Fahrzeuges (4) von dem auch die Entfernung messenden Radarsensor (10) beim Passieren der Fotolinie (FL) ermittelt wird, um über die ermittelte Entfernung den Fotopunkt (FP) auf der Fotolinie (FL) zu erfassen.

6. Verfahren nach Anspruch 4, **dadurch gekennzeichnet,**
**dass** die Fotolinie (FL) eine zum Standort der Kamera (5) und der Ausrichtung der Kameraachse (6) in fester Beziehung stehende gedachte Linie ist, deren Passieren durch das Verletzer-Fahrzeug (4) rechnerisch ermittelt wird, indem dieses an einem vorbekannten Ort detektiert wird, die Geschwindigkeit gemessen wird und aus dem Ort und der Geschwindigkeit der Zeitpunkt des Passierens der Fotolinie (FL) errechnet wird, wobei mit der messtechnischen Erfassung des Verkehrsverstoßes auch die Entfernung des Verletzer-Fahrzeuges (4) vom einem die Entfernung messenden Messsensor, der in einer bekannten Relativlage zur Kamera (5) angeordnet ist, beim Passieren der Fotolinie (FL) ermittelt wird, um über die ermittelte Entfernung den Fotopunkt (FP) auf der Fotolinie (FL) zu erfassen.

7. Verfahren nach Anspruch 4, **dadurch gekennzeichnet,**
**dass** die Fotolinie (FL) der Randstrahl des Scanwinkelbereiches eines Laserscanners ist, dessen Relativlage zur Kamera (5) und der Kameraachse (6) durch den Standort des Laserscanners, den Scanwinkel und einer festen Winkellage der Laserscannerachse und
damit des Randstrahles zur Kameraachse (6) bestimmt ist, und mit der messtechnischen Erfassung des Verkehrsverstoßes auch die Entfernung des Verletzer-Fahrzeuges (4) von dem die Entfernung messenden Laserscanner, der in einer bekannten Relativlage zur Kamera (5) angeordnet ist, beim Passieren der Fotolinie (FL) ermittelt wird, um über die ermittelte Entfernung den Fotopunkt (FP) auf der Fotolinie (FL) zu erfassen.

8. Verfahren nach Anspruch 5 und 7, **dadurch gekennzeichnet,**
**dass** der Randstrahl und die Kameraachse (6) zusammenfallen.

9. Verfahren nach einem der Ansprüche 5, 6 oder 7, **dadurch gekennzeichnet,**
**dass** der Fotopunkt (FP) als Punkt auf der Fotolinie (FL) im Abstand der ermittelten Entfernung festgelegt wird, womit zu jeder ermittelten Entfernung individuell ein Bildausschnitt (8) ausgewählt wird.

10. Verfahren nach einem der Ansprüche 5, 6 oder 7, **dadurch gekennzeichnet,**
**dass** der Fotopunkt (FP) als Punkt auf der Fotolinie (FL) im Abstand des Mittelwertes eines vorgegebenen Entfernungsintervalls festgelegt wird, womit für ermittelte Entfernungen innerhalb eines vorgegebenen Entfernungsintervalls ein gleicher Bildausschnitt (8) ausgewählt wird, was ein Reduzierung der Rechenkapazität erlaubt.

11. Verfahren nach Anspruch 1, **dadurch gekennzeichnet,**
**dass** die Kamera (5) oberhalb der Fahrbahn (1) montiert wird, wobei die Kameraachse (6) zum Fahrbahnrand parallel ausgerichtet wird.

12. Verfahren nach Anspruch 11, **dadurch gekennzeichnet,**
**dass** die Fotolinie (FL) eine in einer von der Kamera (5) vorgegebenen Entfernung senkrecht zur Kameraachse (6) verlaufende, gedachte Linie ist und ein entfernungsmessender Radarsensor (10) einen Radarkegel (9) so auf die Fahrbahn (1) richtet, dass die Radarachse mit der Kameraachse (6) zusammenfällt und der Radarsensor (10) den Winkel ermittelt, unter dem das Verletzer-Fahrzeug (4) zu dem Zeitpunkt, an dem es in der vorgegebenen Entfernung detektiert wird, vom Radarsensor (10) erfasst wird, um aus dem Winkel und der Entfernung den Fotopunkt (FP) zu bestimmen.

13. Verfahren nach Anspruch 11, **dadurch gekennzeichnet,**
**dass** die Fotolinie (FL) eine in einer von der Kamera (5) vorgegebenen Entfernung senkrecht zur Kameraachse (6) verlaufende, gedachte Linie ist und ein entfernungsmessender Laserscanner, dessen Laserscannerachse in Richtung der Kameraachse (6) ausgerichtet ist, den Winkel des Verletzer-Fahrzeuges (4) zur Kameraachse (6) ermittelt, unter dem das Verletzer-Fahrzeug (4) zu dem Zeitpunkt, an dem es in der vorgegebenen Entfernung detektiert wird, vom Laserscanner erfasst wird, um aus dem Winkel und der Entfernung den Fotopunkt (FP) zu bestimmen.

14. Verfahren nach Anspruch 1, **dadurch gekennzeichnet,**
**dass** der Bildausschnitt (8) die Form eines Parallelogramms aufweist, das mit einer Seite mit der in die Bildaufnahme (7) projizierten Fotolinie (FL) zusammenfällt.

15. Verfahren nach Anspruch 1, **dadurch gekennzeichnet,**
**dass** der vergrößerte Bildausschnitt (8) in seiner Größe auf die Bildschirmgröße eines Monitors angepasst ist und die Darstellung des Bildausschnittes (8) auf dem Monitor erfolgt.

16. Verwendung eines nach Anspruch 1 erzeugten Bildausschnittes (8) als Beweis dafür, dass das im Bildausschnitt (8) abgebildete Fahrzeug das Verletzer-Fahrzeug ist.

## Claims

1. A method for penalisation of traffic offences, wherein a traffic offence on a multi-lane roadway (1) is detected by measurements taken by a measuring device and an image (7) of the offender's vehicle (4) is taken by a camera (5) as soon as the front of the vehicle, in the case of oncoming traffic, or the rear of the vehicle, in the case of departing traffic, passes a predetermined photograph line (FL),
wherein a detail (8) of the image (7), in which the vehicle registration number of the offender's vehicle (4) is shown, is enlarged to and displayed at a predetermined size, **characterised in that**
a photograph point (FP) on the photograph line (FL) is detected as a function of the location at which the offender's vehicle (4) passes the photograph line (FL), and the detail (8) is selected with respect to said photograph point (FP) in terms of position and size.

2. The method according to claim 1, **characterised in that**
the photograph line (FL) is formed by a number of strip sensors (3.1, 3.2) installed in or on the road surface, each assigned to one lane (2.1, 2.2), the relative position of said strip sensors (3.1, 3.2) with respect to the camera (5) and the camera axis (6) being determined by the given installation of the camera (5), and the location at which the offender's vehicle (4) passes the photograph line (FL) being defined by the lane (2.1, 2.2) to which the strip sensor (3.1, 3.2) detecting the offender's vehicle (4) is assigned, and a selected point on the strip sensor (3.1, 3.2) detecting the offender's vehicle (4) is defined as the photograph point (FP), so that the same detail (8) is enlarged for each lane (2.1, 2.2).

3. The method according to claim 1, **characterised in that**
the photograph line (FL) is formed by strip sensors (3.1, 3.2) installed in or on the road surface, each assigned to one lane (2.1, 2.2), the relative position of said strip sensors (3.1, 3.2) with respect to the camera (5) and the camera axis (6) being determined by the given installation of the camera (5), and the centre between two adjacent strip sensors (3.1, 3.2) being defined as the photograph point (FP) if the offender's vehicle (4) is detected by both strip sensors (3.1, 3.2).

4. The method according to claim 1, **characterised in that**
the camera (5) is installed next to the roadway (1) and the camera axis (6) is aligned such that it intersects with the lanes (2.1, 2.2) of the roadway (1) at an acute angle.

5. The method according to claim 4, **characterised in that**
the photograph line (FL) is a marginal ray of a radar cone (9), whose position relative to the camera (5) and the camera axis (6) is determined by the location of the radar sensor (10) and a fixed angular position of the radar beam axis and, thus, of the marginal ray with respect to the camera axis (6), and by taking measurements of the traffic offence the distance of the offender's vehicle (4) from the radar sensor (10) which also measures the distance is also determined when the offender's vehicle (4) passes the photograph line (FL), so as to detect the photograph point (FP) on the photograph line (FL) via the distance determined.

6. The method according to claim 4, **characterised in that** the photograph line (FL) is an imaginary line in a fixed relationship with the location of the camera (5) and the alignment of the camera axis (6), the passing of said imaginary line by the offender's vehicle (4) being computed by detecting the offender's vehicle (4) at a previously known location, measuring its speed and computing the time of passage of the photograph line (FL) from said location and speed,
wherein the measurements taken of the traffic offence also include determining the distance of the offender's vehicle (4) from a distance-measuring sensor, which is arranged in a kown relative position to the camera (5), when the offender's vehicle (4) passes the photograph line (FL), so as to detect the photograph point (FP) on the photograph line (FL) via the distance determined.

7. The method according to claim 4, **characterised in that**
the photograph line (FL) is the marginal ray of the scanning angle range of a laser scanner, whose position relative to the camera (5) and the camera axis (6) is determined by the location of the laser scanner, the scanning angle and a fixed angular position of the laser scanner axis and, thus, of the marginal ray with respect to the camera axis (6), and by taking measurements of the traffic offence the distance of the offender's vehicle (4) from the distance-measuring laser scanner, which is arranged in a known position relative to the camera (5), is also determined when the offender's vehicle (4) passes the photograph line (FL), so as to detect the photograph point (FP) on the photograph line (FL) via the distance determined.

8. The method according to claims 5 and 7, **characterised in that**
the marginal ray and the camera axis (6) coincide.

9. The method according to any one of claims 5, 6 or 7, **characterised in that**
the photograph point (FP) is defined as a point on the photograph line (FL) spaced at the determined distance, thereby selecting a detail (8) for each distance determined.

10. The method according to any one of claims 5, 6 or 7, **characterised in that**
the photograph point (FP) is defined as a point on the photograph line (FL) spaced at the average value of a predetermined distance interval, thereby selecting the same detail (8) for distances determined within a predetermined distance interval, which allows a reduction in computing capacity.

11. The method according to claim 1, **characterised in that**
the camera (5) is mounted above the roadway (1), aligning the camera axis (6) parallel to the roadway edge.

12. The method according to claim 11, **characterised in that**
the photograph line (FL) is an imaginary line extending perpendicular to the camera axis (6) at a distance predetermined by the camera (5), and a distance-measuring radar sensor (10) directs a radar cone (9) onto the roadway (1) such that the radar axis coincides with the camera axis (6) and the radar sensor (10) determines the angle at which the offender's vehicle (4) is detected by the radar sensor (10) at the time it is detected at the predetermined distance, so as to determine the photograph point (FP) from said angle and distance.

13. The method according to claim 11, **characterised in that**
the photograph line (FL) is an imaginary line extending perpendicular to the camera axis (6) at a distance predetermined by the camera (5), and a distance-measuring laser scanner, whose laser scanning axis is aligned in the direction of the camera axis (6), determines the angle at which the offender's vehicle (4) is detected with respect to the camera axis (6) by the laser scanner at the time it is detected at the predetermined distance, so as to determine the photograph point (FP) from said angle and distance.

14. The method according to claim 1, **characterised in that** the detail (8) has the shape of a parallelogram which has one side coinciding with the photograph line (FL) projected into the image (7).

15. The method according to claim 1, **characterised in that**
the size of the enlarged detail (8) is adapted to the display size of a screen and the detail (8) is displayed on said screen.

16. The use of a detail (8) generated according to claim 1 as evidence that the vehicle shown in the detail (8) is the offender's vehicle.

## Revendications

1. Procédé pour sanctionner des infractions au trafic routier, dans lequel une infraction au trafic routier est détectée métrologiquement sur une chaussée (1) à plusieurs voies et une image (7) du véhicule de l'infracteur (4) est prise par une caméra (5), dès que l'avant du véhicule, dans le cas de trafic en approche, ou l'arrière du véhicule, dans le cas de trafic en éloignement, traverse une ligne photographique (FL),
et dans lequel un détail (8) de l'image (7) représentant le numéro d'immatriculation du véhicule de l'infracteur (4) est agrandi à une taille prédéfinie et représenté à cette taille, **caractérisé en ce**
**qu'**un point photographique (FP) sur la ligne photographique (FL) est détecté en dépendance de l'endroit où le véhicule de l'infracteur (4) traverse la ligne photographique (FL), et la position et la taille du détail (8) sont choisies par rapport à ce point photographique (FP).

2. Procédé selon la revendication 1, **caractérisé en ce que**
la ligne photographique (FL) est constituée par un nombre de capteurs à bande (3.1, 3.2) installés dans ou sur la surface de la chaussée, dont chacun est associé avec une voie (2.1, 2.2) respective et dont la position relative par rapport à la caméra (5) et l'axe de caméra (6) est déterminée par l'installation donnée de la caméra (5), et l'endroit où le véhicule de l'infracteur (4) traverse la ligne photographique (FL) est défini par la voie (2.1, 2.2) à laquelle ce capteur à bande (3.1, 3.2) est associé qui détecte le véhicule de l'infracteur (4), et un point choisi sur ledit capteur à bande (3.1, 3.2) détectant le véhicule de l'infracteur (4) est défini come point photographique (FP), de sorte que le même détail (8) soit agrandi pour chaque voie (2.1, 2.2).

3. Procédé selon la revendication 1, **caractérisé en ce que**
la ligne photographique (FL) est constituée par des capteurs à bande (3.1, 3.2) installés dans ou sur la surface de la chaussée, dont chacun est associé avec une voie (2.1, 2.2) respective et dont la position relative par rapport à la caméra (5) et à l'axe de caméra (6) est déterminée par l'installation donnée de la caméra (5), et le centre entre deux capteurs à bande (3.1, 3.2) adjacents est défini comme point photographique (FP) lorsque le véhicule de l'infracteur (4) est détecté par tous les deux capteurs à bande (3.1, 3.2).

4. Procédé selon la revendication 1, **caractérisé en ce que**
la caméra (5) est installée à côté de la chaussée (1) et l'axe de caméra (6) est aligné de sorte qu'elle coupe les voies (2.1, 2.2) de la chaussée (1) sous un angle aigu.

5. Procédé selon la revendication 4, **caractérisé en ce que**
la ligne photographique (FL) est un faisceau périphérique d'un cône radar (9), dont la position relative par rapport à la caméra (5) et à l'axe de caméra (6) est déterminée par l'endroit du capteur radar (10) et une position angulaire fixe de l'axe du rayon radar, et donc du faisceau périphérique, par rapport à l'axe de caméra (6), déterminant en même temps que la détection métrologique de l'infraction au trafic routier également la distance qui existe, lors de la traversée de la ligne photographique (FL), entre le véhicule de l'infracteur (4) et le capteur radar (10) qui mesure également la distance, de manière à détecter le point photographique (FP) sur la ligne photographique (FL) à partir de la distance déterminée.

6. Procédé selon la revendication 4, **caractérisé en ce que** la ligne photographique (FL) est une ligne imaginaire en relation ferme avec l'endroit de la caméra (5) et avec l'alignement de l'axe de caméra (6), dont la traversée par le véhicule de l'infracteur (4) est calculé en détectant ce dernier à un endroit connu, mesurant sa vitesse et calculant l'instant de la traversée de la ligne photographique (FL) à partir dudit endroit et de ladite vitesse, déterminant en même temps que la détection métrologique de l'infraction au trafic routier également la distance qui existe, lorsque la ligne photographique (FL) est traverse, entre le véhicule de l'infracteur (4) et un capteur de mesure qui mesure la distance et se trouve dans une position relative connue par rapport à la caméra (5), de manière à détecter le point photographique (FP) sur la ligne photographique (FL) à partir de la distance déterminée.

7. Procédé selon la revendication 4, **caractérisé en ce que**
la ligne photographique (FL) est le faisceau périphérique de la plage angulaire de balayage d'un scanneur laser, dont la position relative par rapport à la caméra (5) et à l'axe de caméra (6) est déterminée par l'endroit du scanneur laser, l'angle de balayage et une position angulaire fixe de l'axe du scanneur laser, et donc du faisceau périphérique, par rapport à l'axe de caméra (6), et en même temps que la détection métrologique de l'infraction au trafic routier on détermine également la distance qui existe, lorsque la ligne photographique (FL) est traverse, entre le véhicule de l'infracteur (4) et le scanneur laser qui mesure la distance, de manière à détecter le point photographique (FP) sur la ligne photographique (FL) à partir de la distance déterminée.

8. Procédé selon les revendications 5 et 7, **caractérisé en ce que**
le faisceau périphérique et l'axe de caméra (6) coïncident.

9. Procédé selon l'une quelconque des revendications 5, 6 ou 7, **caractérisé en ce que**
le point photographique (FP) est défini comme un point sur la ligne photographique (FL) espacé par la distance déterminée, choisissant ainsi un détail (8) pour chaque distance déterminée.

10. Procédé selon l'une quelconque des revendications 5, 6 ou 7, **caractérisé en ce que**
le point photographique (FP) est défini comme un point sur la ligne photographique (FL) espacé par le moyen d'un intervalle de distance donné, choisissant ainsi un détail (8) pour des distances déterminées dans un intervalle de distance donné, ce qui permet de réduire la capacité de calcul.

11. Procédé selon la revendication 1, **caractérisé en ce que**
la caméra (5) est montée au-dessus de la chaussée (1), alignant l'axe de caméra (6) parallèlement par rapport au bord de la chaussée.

12. Procédé selon la revendication 11, **caractérisé en ce que**
la ligne photographique (FL) est une ligne imaginaire s'étendant à une distance donnée par la caméra (5), perpendiculairement par rapport à l'axe de caméra (6), et un capteur radar (10) mesurant des distances dirige un cône radar (9) sur la chaussée (1) de sorte que l'axe radar coïncide avec l'axe de caméra (6) et le capteur radar (10) détermine l'angle sous lequel le véhicule de l'infracteur (4) est détecté par le capteur radar (10) à l'instant qu'il est détecté à la distance donnée, pour déterminer le point photographique (FP) à partir dudit angle et de ladite distance.

13. Procédé selon la revendication 11, **caractérisé en ce que**
la ligne photographique (FL) est une ligne imaginaire s'étendant à une distance donnée par la caméra (5), perpendiculairement par rapport à l'axe de caméra (6), et un scanneur laser mesurant des distances, dont l'axe de balayage laser est aligné en direction de l'axe de caméra (6), détermine l'angle du véhicule de l'infracteur (4) par rapport à l'axe de caméra (6) sous lequel le véhicule de l'infracteur (4) est détecté par le scanneur laser à l'instant qu'il est détecté à la distance donnée, pour déterminer le point photographique (FP) à partir dudit angle et de ladite distance.

14. Procédé selon la revendication 1, **caractérisé en ce que** le détail (8) présente
la forme d'un parallélogramme dont un côté coïncide avec la ligne photographique (FL) projetée dans l'image (7).

15. Procédé selon la revendication 1, **caractérisé en ce que**
le détail agrandi (8) est adapté en taille à la taille d'un écran et le détail (8) est représenté sur ledit écran.

16. Utilisation d'un détail (8) produit selon la revendication 1 comme preuve que le véhicule représenté dans ledit détail (8) est le véhicule de l'infracteur.
